# EUROPEAN PATENT SPECIFICATION

(11) **EP 1 587 369 B1**
(45) Date of publication and mention of the grant of the patent: **15.08.2012**
(21) Application number: 03772974.6
(22) Date of filing: 12.11.2003
(51) Int. Cl.: A21B 3/18

(54) **DEVICE FOR REMOVING BAKERY PRODUCTS FROM CONTAINERS**
VORRICHTUNG ZUM ENTFERNEN VON BACKWAREN AUS BEHÄLTERN
DISPOSITIF PERMETTANT DE RETIRER DES PRODUITS DE BOULANGERIE CONTENUS DANS DES RECEPTACLES

(30) Priority: 13.11.2002 NL 1021914
(43) Date of publication of application: 26.10.2005
(73) Proprietor: Kaak, Johan Hendrik Bernard, 7011 DZ Gaanderen (NL)
(72) Inventor: PASCH, Lothar, NL-7061 WV Terborg (NL)
(74) Representative: Ferguson, Alexander
(86) International application number: PCT/NL2003/000795
(87) International publication number: WO 2004/043151

(56) References cited:
- EP-A- 1 021 955
- EP-A- 1 064 847
- FR-A- 2 571 208
- NL-C- 81 915

## Description

The invention relates to a device for removing bakery products from containers.

Bakery products, such as loaves of bread or cakes, usually are accommodated as dough in pans or containers, particularly bakery pans, in order to then be baked in the containers. The containers are usually arranged in the shape of a matrix, in a horizontal plane.

After baking the baked products have to be removed from the containers, which is usually done by means of suction cups.

For improved engagement of elongated loaves of bread it has been suggested in EP1021955 to use straight pins penetrating the short or head ends of the loaves instead of using suction cups engaging the upper side of the loaves. However, a drawback of this is that the distance between the vertical lifting forces exerted on the elongated loaf can be very large, depending on the size of the loaf, and thus the bending moment and the shearing forces in the loaf. This may give cause to the loaf collapsing due to among other things shearing, at the location of the transitions between the dough part portions with which the container is filled and/or -when the dough has been provided with additional parts such as currants or raisins- at the location of said additional parts.

It is an object of the invention to improve on this.

From a first aspect the invention to that end provides a device for removing elongated bakery products from elongated containers after baking as described in claim 1.

By engaging the longitudinal sides of the bakery product at several places, such as a loaf or a cake, the lifting forces are at a short horizontal distance from each other, as a result of which the bakery product is only subjected to bending moments and pull-out forces to a limited degree.

Preferably several pick-up pins are provided for both longitudinal sides of the containers, so that at both longitudinal sides a more or less evenly distributed tension distribution is achievable.

Preferably the pin supports for the pick-up pins engaging into at least one of the longitudinal sides of the bakery product are arranged on the frame in an adjustable manner as to mutual distance, as a result of which the longitudinal dimension but also the consistency of the bakery product, which may vary in longitudinal direction, can be adapted to.

Preferably the pin supports for the pick-up pins engaging into both longitudinal sides of the bakery product are arranged on the frame in an adjustable manner as to mutual distance, as a result of which the transverse dimension of the bakery product can also be adapted to.

In a further development of the device according to the invention, the pin supports for the pick-up pins that engage into the one longitudinal side of the bakery product and the pin supports for the pick-up pins that engage into the other longitudinal side of the bakery product are arranged on the frame spaced apart in transverse direction of the containers, as a result of which they have a good initial position for engaging the bakery product.

The pin supports may be arranged substantially on either side of the containers. This arrangement is advantageous when the pick-up pins are held linearly moveable by the pin supports, and particularly are straight.

It is a further object of the invention to provide a device for removing bakery products from containers of which device the pick-up means take up little space.

Preferably the axes of rotation for the pick-up pins are substantially parallel to the longitudinal axis of the container.

The disruption of the bakery product by the inserted pins is kept to a minimum when the pick-up pins are provided with an engagement end or engagement portion that is concentric with respect to the axis of rotation in question.

In a further development of the devices according to the invention the pin supports for the pick-up pins that engage into the one longitudinal side of the bakery product and the pin supports for the pick-up pins that engage into the other longitudinal side of the bakery product substantially coincide in transverse direction of the containers. The occupation of space can thus be kept very limited and the pin holders and pick-up pins of adjacent series can remain entirely out of each other's reach, particularly when the pin supports are arranged substantially above the containers.

In a space-saving embodiment thereof, the pick-up pins or the pin supports are rotatably arranged and preferably are drivable by a common drive. The axis of rotation for the pick-up pins then preferably is substantially parallel to the longitudinal axis of the container.

Here it is also preferred that the pick-up pins are provided with an engagement end or engagement portion that is concentric with respect to the axis of rotation in question.

In general the device according to the invention is advantageously provided with means for moving the containers up or down with respect to the pin supports.

From a further aspect the invention provides a method for removing elongated bakery products from elongated containers, wherein pick-up pins positioned along the longitudinal side of the containers are inserted into the bakery product at the longitudinal side of the bakery product, after which the container and the pick up pins are moved apart in vertical direction in order to remove the bakery products held by the pick-up pins from the containers.

Preferably pick-up pins are inserted into the bakery product from both longitudinal sides.

The invention will be elucidated on the basis of an exemplary embodiment shown in the attached drawings, in which:
Figures 1A-C show a front view, a top view and a side view, respectively, of a first embodiment of a device according to the invention;
Figures 2A-C show a front view, a top view and a side view, respectively, of a second embodiment of a device according to the invention; and
Figures 3A-C show a front view, a top view and a side view, respectively, of a third possible embodiment of a device according to the invention.

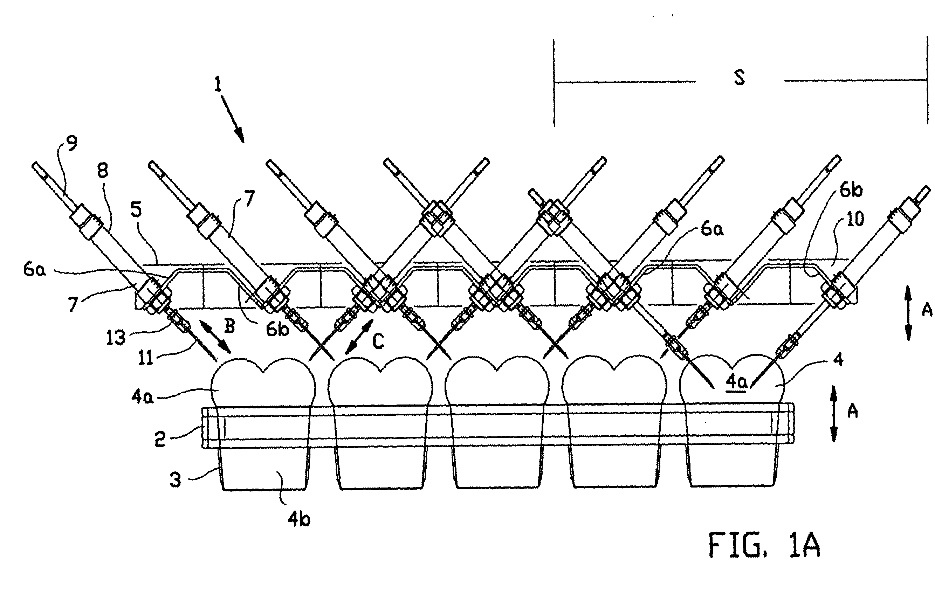

In figures 1A-C a device 1 for removing elongated loaves, cakes etcetera from bakery pans is shown. In this example so-called incised loaves 4 have been baked in containers 3, which in a certain number are supported in a frame 2. The frame 2 is supported in a manner that is not shown in a framework, in which also frame 10 is placed at a distance above the frame 2.

The frame 10 comprises a number of parallel inverted U-shaped support strips 5, wherein in upwardly inclined extending edge strips 6a, 6b pin holders 7 have been attached. The pin holders 7 comprise a pneumatic cylinder 8, for extending or retracting (directions B, C) the accompanying piston rod 1 2 to which via attachment head 13 pick-up pin 11 provided with a sharp tip is attached. At the other end the piston rod protrudes with extended piston rod 9.

As can be seen in figure 1A the pin holders 7 are positioned in two directions, in this example at 45° to the horizontal and at 90° to each other. As can be seen for the loaf 4 shown at the right-hand side of the frame 2, when extending two pin holders 7 positioned in this frame 2 diagonally above either side of the longitudinal sides of the loaf 4, the accompanying pick-up pins 11 will penetrate the portion 4a of the loaf 4 protruding above the frame 2 and the containers 3, above a possible filling in the loaf (or cake). When the containers are only filled to the rim both frames 2 and 10 can be kept closer together in order for the pick-up pins to be able to penetrate into the bakery product over the rim.

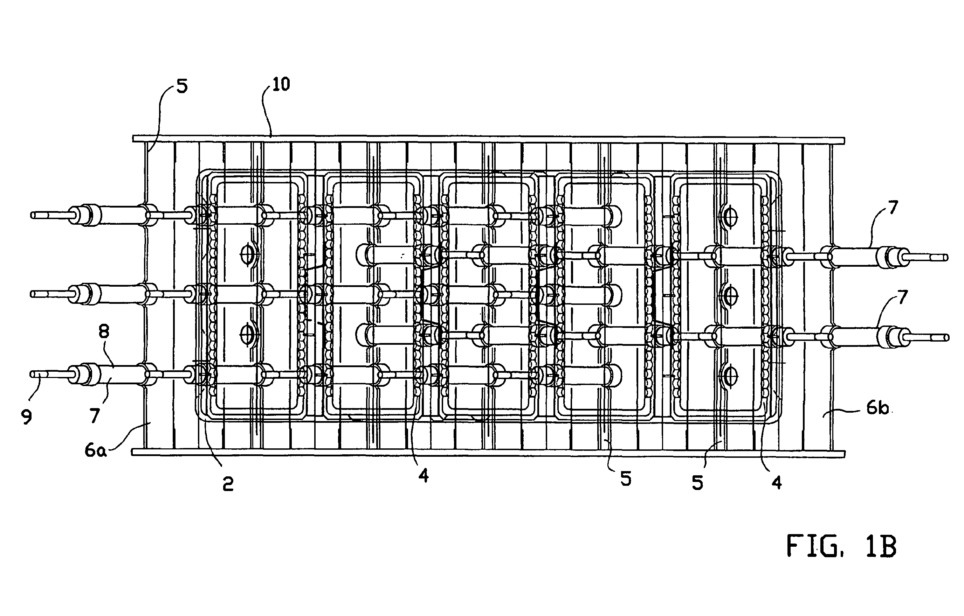

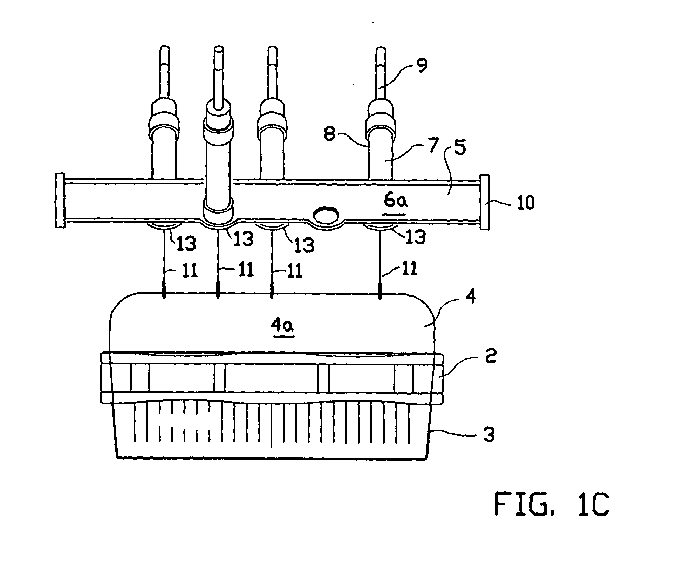

As can be seen in the figures 1B and 1C the loaf 4 is then engaged from the one longitudinal side by two pick-up pins 11 and from the opposite side by three pick-up pins. The said three pick-up pins are equidistanced here, and in this example these distances are also equal to the intermediate distance of the two pick-up pins situated at the other side which are arranged on the edge strip 6a in question.

For each loaf there are therefore always three by two pick-up pins present. The loaf 4 is then engaged at several places along its length and stably held with a minimum of internal tensions. After all loaves 4 held in the frame 2 have been penetrated in this way by the pick-up pins in question, the frame 2 is moved downwards, with means that are not further shown, in the direction A, or, alternatively, the frame 10 is moved upwards in the direction A. Thus the loaves 4 are released from the containers 3.

As can be seen in the figures 1A and 1B the occupation of space of the inclined pin holders 7 is rather large. For engaging one loaf an occupation of space S in horizontal direction is necessary. The freedom of moving the support strips 5, which to that end may be detachably accommodated in the frame 10, therefore is limited. As can clearly be seen in figure 1B, the freedom of moving the pin holders in the direction along the support strips 5 is also limited. For such an adjustment the support strips 5 may be provided with more holes than are depicted, in which holes the pin holders 7 can be attached.

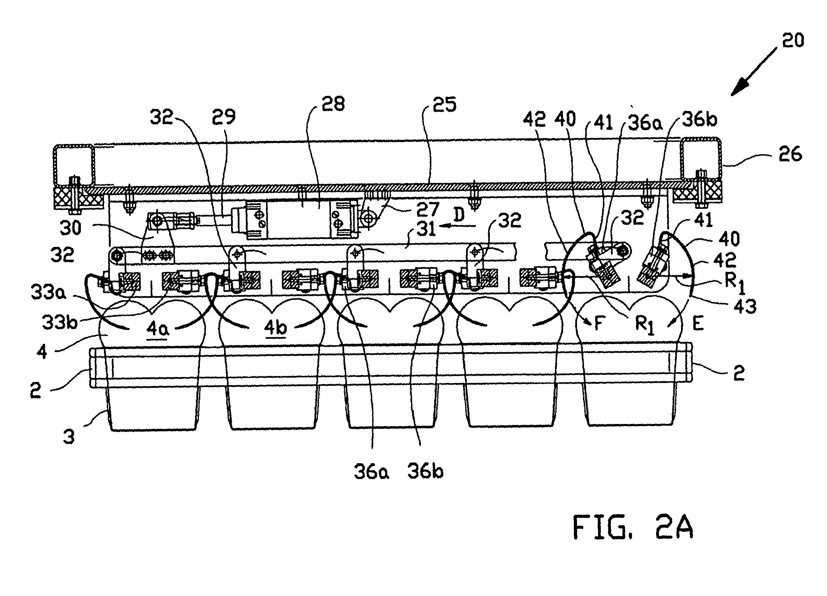

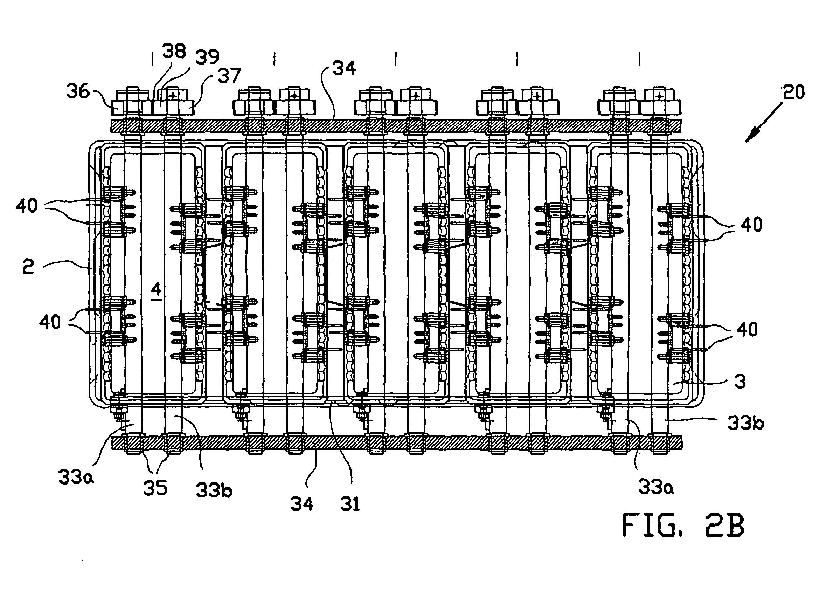

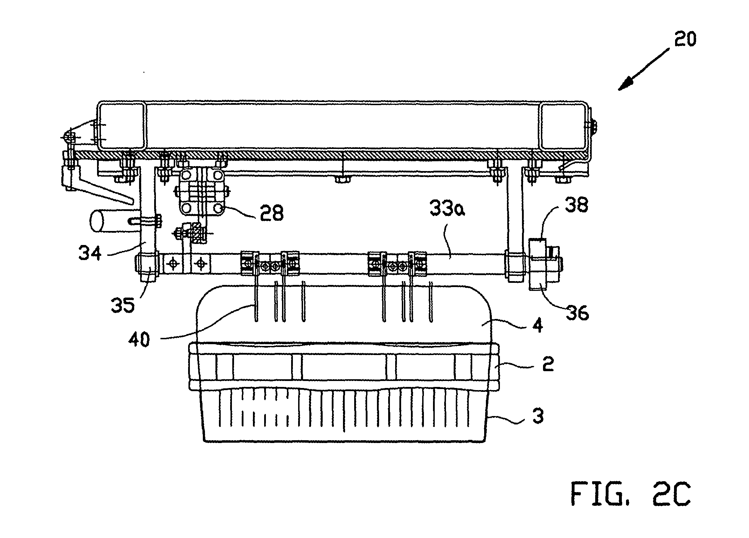

A further development according to which more freedom is achieved on this point is the one according to figure 2A-C, in which a upper frame 20 with longitudinal girders 26 and cross girders 25 is placed above the frame 2 provided with loaf or cake containers 3. At one end cross girder 25 a pneumatic cylinder 28 is attached with attachment plate 27, the piston rod 29 of which cylinder 28 is retractable and extendable. At the end of the piston rod 29 there is a horizontally extending translation rod 31 via attachment plate 30. To the translation rod 31, lever arms 32 are attached at regular intermediate distances, which lever arms are subsequently attached to shafts 33a (see figure 2B) which at the ends are bearing mounted in the longitudinal girders 34 that are fixed to the frame 20. This can be seen more clearly in figure 2B, in which it can be seen that the shafts 33a with the one end 35 are bearing mounted in a longitudinal girder 34, and at the other end are also bearing mounted in the other longitudinal girder 34, but continue there and are provided with a toothed wheel 36 having teeth 38. Adjacently, parallel to it, a comparable shaft 33b extends, which is provided with a toothed wheel 37 having teeth 39, which interengage with teeth 38. Such a two-shaft 33a, 33b, arrangement is provided above every loaf container 3.

On the shafts 33a, 33b pin holders 36a,b are attached, from which pins 40 extend that have been provided with a more or less straight part 41 and a circularly bent part 41 provided with a sharp pricking end 43, which is the actual pick-up pin. The radius R1 of the curved portion 42 has the rotation centre line of the shaft 33a or 33b in question as its centre.

The arrangement according to figure 2A has the additional advantage of the simple, space-saving central drive (cylinder 28).

Starting from the initial position shown for the right-hand loaf in figure 2A the cylinder 28 is operated, so that the piston rod 29 is extended. The translation rod 31 is then moved to the left in the direction D, as a result of which the lever arms 32 are rotated from an inclined position, shown on the right-hand side of figure 32a, to a vertical position, shown at the left-hand side thereof. As a result the shafts 33a are rotated in the direction F, and due to the tooth-interengagement of the toothed wheels 36, 37, the shafts 33b are rotated in opposite direction E. With those rotations the pin holders 36a,b are also rotated in the directions F and E, as a result of which the curved pin portions 41 are pricked into the upper part 4a of the loaf 4. Due to the relation with the point of rotation the loaf will only be touched by the pick-up pins according to a line that coincides with the circle defined by the curved pin portion 41.

After the pin portions 42 have thus penetrated the loaves 4, as can be seen on the left-hand side of the figure 2A, the actual removing of the loaves 4 from the containers 3 can start, by lowering the frame 2 or lifting the frame 10.

As can be seen in figure 2B, a plurality of pick-up points in the longitudinal direction of the loaf can be provided with this arrangement. It can also be seen that there is more freedom regarding the positioning of the pin holders than in the embodiment of the figures 1A-C.

It is noted that either the cylinder 28 or the rod 29 can also be operated differently, such as electrically or magnetically.

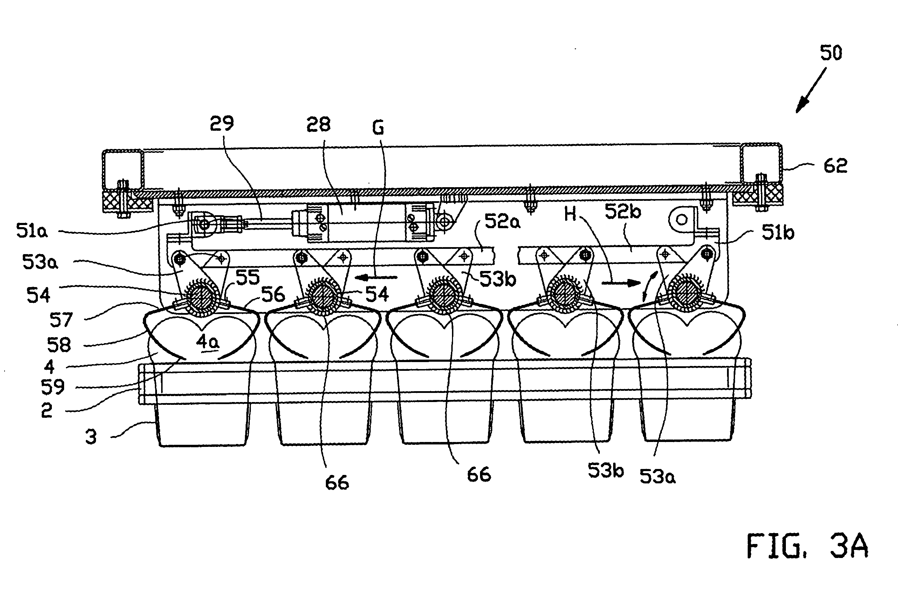

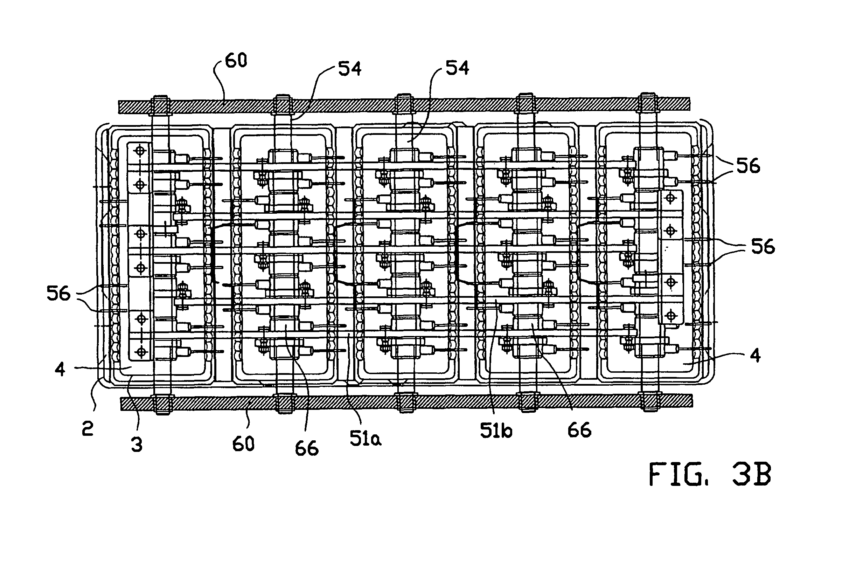

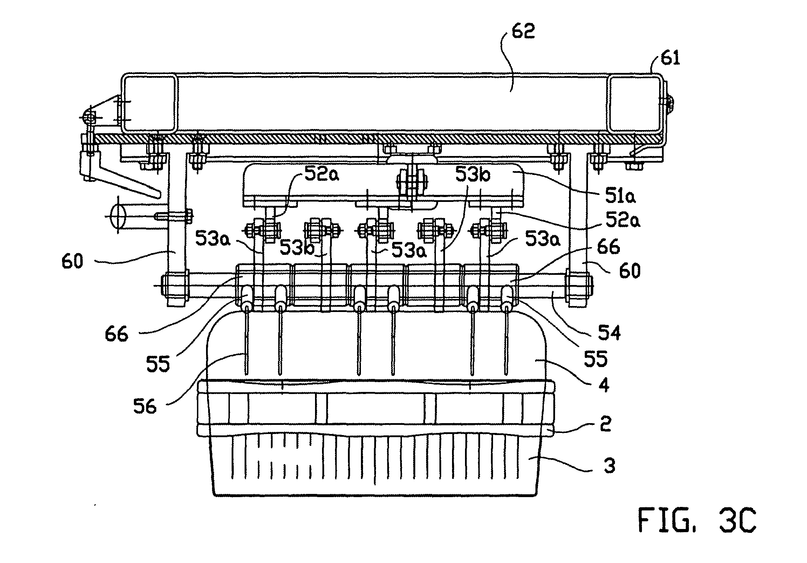

The freedom of placement in the direction transverse to the longitudinal direction of the loaves is further increased with the embodiment of the figures 3A-C. Above the frame 2 with the containers 3 a frame 50 is placed, having longitudinal girders 62 and cross girders 61. In a manner comparable to the arrangement of the figures 2A-C, a pneumatic cylinder 28 is attached to one cross girder 61, the piston rod 29 of which cylinder 28 is attached at the end to an angle profile 51 a, to which (also see figures 3B and 3C) a number of horizontal translation rods 52a is attached. The rods 52a are placed alternating with rods 52b, which at the end are attached to an angle profile 51 b, which is attached to the end of a piston rod of a cylinder assembly corresponding to the shown cylinder 28, which however is positioned for operation in the opposite direction.

Lever arms 53a, 53b are hinged to the translation rods 52a, 52b, which lever arms are attached in a rotationally fixed manner to bushes 66a, 66b serving as pin holders, which bushes are rotatably journalled on the shafts 54. The shafts 54 are rotatably journalled at the ends in longitudinal girders 60 (see figures 3B and 3C) that are fixed to the frame 50.

Pick-up pins 56 are attached on the bushes 66a, 66b by means of plug-in bushes 55 provided with locking screws. The pick-up pins 56 are provided with a straight portion 57 and with a curved portion 58 provided with a sharp tip 59, the centre of curvature of which curved portion 58 coincides with the rotation centre line of the shaft 54.

In the situation shown in figure 3A, all pins with the sharp tip 59 and a considerable part of the curved portions 58 have penetrated the loaves 4. In order to achieve this the piston rods 39 of the cylinders 28 have been extended, as a result of which the translation rods 52a and 52b have moved in the directions G and H, respectively. Thus the lever arms 53a, 53b have also rotated and thus the bushes 66a, 66b, to be considered as pin holders, which have thus let the curved portions 58 penetrate the loaves 4. In the situation resulting from that and shown in figure 3A either the frame 2 can be lowered again or the frame 50 can be lifted in order to actually lift the loaves 4 from the containers 3.

As can clearly be seen in figure 3A, the horizontal occupation of space of the pin holders and their axes of rotation is very limited, and hardly more than the width of a container 3. As can be seen in figure 3B the loaves 4 will be engaged at many places along their length. The arrangement can be changed by removing the pins 56 from the bushes 55 intended for them. For changing the intermediate distance between the pick-up pins, also more of the distance bushes that are placed between the containers 66a, 66b can be placed in addition or be removed.

## Claims

1. Device (1) for removing elongated bakery products (4) from elongated containers (3) after baking, comprising a frame having one or more supports for the containers, wherein the containers (3) being placed with their longitudinal sides adjacent , as well as means for picking up the bakery products, which pick-up means comprise pick-up pins (11,40,56) arranged in pin supports (6a,6b,36a,36b,66a,66b) means for moving the pick-up pins between an initial position, in which the pick-up pins are free from the bakery products, and a pick-up position, in which the pick-up pins have penetrated the bakery product, and means for moving the contrainers and the pick-up pins a part in vertical direction in order to remove the bakery products held by the pick-up pins from the containers. **characterized in that** the pin supports (6a,6b,36a,36b,66a,66b) are positioned in the frame (10,20,50) for letting the pick-up pins, (11,40,56) engage into the bakery products (4) at the longitudinal sides of the containers (3) wherein for at least one of the longitudinal sides of the containers (3) several pick-up pins (11,40,56) are provided.

2. Device according to claim 1, wherein the pin supports (36a,36b) for the pick-up pins engaging into at least one of the longitudinal sides of the bakery product (4) are arranged on the frame (20) in an adjustable manner as to mutual distance.

3. Device according to any one of the preceding claims, wherein the pin supports (6a, 36b) or the pick-up pins that engage into the one longitudinal side of the bakery product (4) and the pin supports (6a, 36b) for the pick-up pins that engage into the other longitudinal side of the bakery product (4) are arranged on the frame (10,20) spaced apart in transverse direction of the containers (3) wherein, preferably, the pin supports (6a,6b,36a,36b) arranged substantially above the containers (5)

4. Device according to claim 3, wherein the pick-up pins (40) or the pin supports (36a 36b) are rotatably arranged, wherein, preferably, the axes of rotation (33a, 33b) for the pick-up pins (40) are substantially parallel to the longitudinal axis of the container (3).

5. Device according to claim 4, wherein the pick-up pins (40) are provided with an engagement end (42,43) that is concentric with respect to the axis of rotation (33a,33b,) question.

6. Device according to claim 3, wherein the pin supports (7) are arranged substantially on either side of the containers (3) wherein, preferably, the pick-up pins (11) are held linearly moveable by the pin supports (7) wherein, preferably, the pick-up pins (11) are straight.

7. Device according to claim 1 or 2, wherein the pin supports (66a) for the pick-up pins (56) that enrage into the one longitudinal side of the bakery product (4) and the pin supports (66b) for the pick-up pins (56) that engage into the other longitudinal side of the bakery product (4) substantially coincide in transverse direction of the containers (3), wherein, preferably, the pin supports (66a, 66b) are arranged substantially above the containers (3).

8. Device according to claim 7, wherein the pick-up pins (56) or the pin supports (66a,66b) are rotatably arranged and preferably are drivable by a common drive (28) wherein, preferably, the axis of rotation (54) for the pick-up pins (56) is substantially parallel to the longitudinal axis of the container (3).

9. Device according to claim 8, wherein the pick-up pins (56) are provided with an engagement end (59) or portion (58) that is concentric with respect to the axis of rotation (54) in question.

10. Device according to claim 1 or 2, wherein the pick-up pins are rotatably arranged in the pin supports and preferably are drivable by a common drive, wherein, preferably, the axis of rotation for the pick-up pins is substantially parallel to the longitudinal axis of the containers.

11. Device according to claim 10, wherein the pick-up pins are provided with an engagement end or portion that is concentric with respect to the axis of rotation in question.

12. Device according to any one of the preceding claims, furthermore provided with means for moving the containers up or down with respect to the pin supports.

13. Device according to any one of the preceding claims, wherein for both longitudinal sides of the containers (3) several pick-up pins (18,40,56) are provided.

14. Device according to any one of the preceding claims, wherein the pin supports (36a,36b) for the pick-up pins engaging into both longitudinal sides of the bakery product (4) are arranged on the frame (20) in an adjustable manner as to mutual distance.

15. Method for removing elongated bakery products (4) from elongated containers (3) after baking, wherein the containers (3) being placed with their longitudinal sides adjacent, **characterized in that** pick-up pins (41,40,56) positioned along the longitudinal side of the containers (3) are inserted into the bakery product (4) at the longitudinal side of the bakery product (4) after which the container (3) and the pick up pins (11,40,56) are moved apart in vertical direction (A) in order to remove the bakery products (4) held by the pick-up pins (11,40,56) from the containers (3).

16. Method according to claim 15, wherein the pick-up pins (11,40,56) are inserted into the bakery product (4) from both longitudinal sides.

## Patentansprüche

1. Vorrichtung (1) zur Entfernung länglicher Backprodukte (4) aus länglichen Behältern (3) nach einem Backvorgang, aufweisend einen Rahmen mit einem oder mehreren Trägern für die Behälter, wobei die Behälter (3) mit ihren Längsseiten benachbart angeordnet sind, sowie Mittel zur Aufnahme der Backprodukte, wobei die Aufnahmemittel Aufnahmestifte (11, 40, 56), die in Stifthaltern (6a, 6b, 36a, 36b, 66a, 66b) angeordnet sind, und Mittel zur Verstellung der Aufnahmestifte zwischen einer Ausgangsposition, in welcher die Aufnahmestifte frei von den Backprodukten sind, und einer Aufnahmeposition, in welcher die Aufnahmestifte in das Backprodukt eingedrungen sind, und Mittel zur Verstellung der Behälter und der Aufnahmestifte voneinander weg in vertikaler Richtung, um die von den Aufnahmestiften gehaltenen Backprodukte aus den Behältern zu entfernen, aufweisen, **dadurch gekennzeichnet, dass** die Stifthalter (6a, 6b, 36a, 36b, 66a, 66b) in dem Rahmen (10, 20, 50) positioniert sind, um die Aufnahmestifte (11, 40, 56) an den Längsseiten der Behälter (3) in die Backprodukte (4) eingreifen zu lassen, wobei für mindestens eine der Längsseiten der Behälter (3) mehrere Aufnahmestifte (11, 40, 56) vorgesehen sind.

2. Vorrichtung (1) nach Anspruch 1, wobei die Stifthalter (36a, 36b) für die Aufnahmestifte, welche in mindestens eine der Längsseiten des Backprodukts (4) eingreifen, an dem Rahmen (20) in einer den gegenseitigen Abstand betreffenden einstellbaren Art und Weise angeordnet sind.

3. Vorrichtung (1) nach einem der vorhergehenden Ansprüche, wobei die Stifthalter (6a, 36a) für die Aufnahmestifte, welche in die eine Längsseite des Backprodukts (4) eingreifen, und die Stifthalter (6b, 36b) für die Aufnahmestifte, welche in die andere Längsseite des Backprodukts (4) eingreifen, an dem Rahmen (10, 20) mit Abstand untereinander in transversaler Richtung der Behälter (3) angeordnet sind, wobei, vorzugsweise, die Stifthalter (6a, 6b, 36a, 36b) im Wesentlichen über den Behältern (3) angeordnet sind.

4. Vorrichtung (1) nach Anspruch 3, wobei die Aufnahmestifte (40) oder die Stifthalter (36a, 36b) drehbar angeordnet sind, wobei, vorzugsweise, die Drehachsen (33a, 33b) der Aufnahmestifte (40) im Wesentlichen parallel zu der Längsachse des Behälters (3) verlaufen.

5. Vorrichtung (1) nach Anspruch 4, wobei die Aufnahmestifte (40) mit einem Eingriffsende (42, 43) versehen sind, welches in Bezug auf die in Frage kommende Drehachse (33a, 33b) konzentrisch ist.

6. Vorrichtung (1) nach Anspruch 3, wobei die Stifthalter (7) im Wesentlichen auf jeder Seite der Behälter (3) angeordnet sind, wobei, vorzugsweise, die Aufnahmestifte (11) durch die Stifthalter (7) linear verstellbar gehalten sind, wobei, vorzugsweise, die Aufnahmestifte (11) geradlinig sind.

7. Vorrichtung (1) nach Anspruch 1 oder 2, wobei die Stifthalter (66a) für die Aufnahmestifte (56), welche in die eine Längsseite des Backprodukts (4) eingreifen, und die Stifthalter (66b) für die Aufnahmestifte (56), welche in die andere Längsseite des Backprodukts (4) eingreifen, sich im Wesentlichen in transversaler Richtung der Behälter (3) decken, wobei, vorzugsweise, die Stifthalter (66a, 66b) im Wesentlichen über den Behältern (3) angeordnet sind.

8. Vorrichtung (1) nach Anspruch 7, wobei die Aufnahmestifte (56) oder die Stifthalter (66a, 66b) drehbar angeordnet und vorzugsweise durch einen gemeinsamen Antrieb (28) antreibbar sind, wobei, vorzugsweise, die Drehachse (54) für die Aufnahmestifte (56) im Wesentlichen parallel zu der Längsachse des Behälters (3) verläuft.

9. Vorrichtung (1) nach Anspruch 8, wobei die Aufnahmestifte (56) mit einem Eingriffsende (59) oder Abschnitt (58) versehen sind, welches oder welcher in Bezug auf die in Frage kommende Drehachse (54) konzentrisch ist.

10. Vorrichtung (1) nach Anspruch 1 oder 2, wobei die Aufnahmestifte in den Stifthaltern drehbar angeordnet und vorzugsweise durch einen gemeinsamen Antrieb antreibbar sind, wobei, vorzugsweise, die Drehachse für die Aufnahmestifte im Wesentlichen parallel zu der Längsachse der Behälter verläuft.

11. Vorrichtung (1) nach Anspruch 10, wobei die Aufnahmestifte mit einem Eingriffsende oder Abschnitt versehen sind, welches oder welcher in Bezug auf die in Frage kommende Drehachse konzentrisch ist.

12. Vorrichtung (1) nach einem der vorhergehenden Ansprüche, welche ferner mit Mitteln zur Verstellung der Behälter nach oben oder unten in Bezug auf die Stifthalter versehen ist.

13. Vorrichtung (1) nach einem der vorhergehenden Ansprüche, wobei für beide Längsseiten der Behälter (3) Aufnahmestifte (11, 40, 56) vorgesehen sind.

14. Vorrichtung (1) nach einem der vorhergehenden Ansprüche, wobei die Stifthalter (36a, 36b) für die Aufnahmestifte, welche in beiden Längsseiten des Backprodukts (4) eingreifen, an dem Rahmen (20) in einer den gegenseitigen Abstand betreffenden einstellbaren Art und Weise angeordnet sind.

15. Verfahren zum Entfernen länglicher Backprodukte (4) aus länglichen Behältern (3) nach einem Backvorgang, wobei die Behälter (3) mit ihren Längsseiten benachbart angeordnet sind, **dadurch gekennzeichnet, dass** Aufnahmestifte (11, 40, 56), welche entlang der Längsseite der Behälter (3) positioniert sind, in das Backprodukt (4) an der Längsseite des Backprodukts (4) eingeführt werden, darauf folgend der Behälter (3) und die Aufnahmestifte (11, 40, 56) in vertikaler Richtung voneinander weg verstellt werden, um die von den Aufnahmestiften (11, 40, 56) gehaltenen Backprodukte (4) aus den Behältern (3) zu entfernen.

16. Verfahren nach Anspruch 15, wobei die Aufnahmestifte (11, 40, 56) in das Backprodukt (4) von beiden Längsseiten eingeführt werden.

## Revendications

1. Dispositif (1) pour retirer des produits de boulangerie allongés (4) de réceptacles allongés (3), après cuisson, comprenant un châssis ayant un ou plusieurs supports pour les réceptacles, dans lequel les réceptacles (3) sont placés avec leurs côtés longitudinaux adjacents, ainsi que des moyens pour ramasser les produits de boulangerie, lesquels moyens de ramassage comprennent des broches de ramassage (11, 40, 56) agencées dans des supports de broche (6a, 6b, 36a, 36b, 66a, 66b) et des moyens pour déplacer les broches de ramassage entre une position initiale dans laquelle les broches de ramassage sont dépourvues des produits de boulangerie, et une position de ramassage, dans laquelle les broches de ramassage pénètrent dans le produit de boulangerie, et des moyens pour déplacer les réceptacles et les broches de ramassage dans une direction verticale afin de déplacer les produits de boulangerie maintenus par les broches de ramassage des réceptacles, **caractérisé en ce que** les supports de broche (6a, 6b, 36a, 36b, 66a, 66b) sont positionnés dans le châssis (10, 20, 50) pour laisser les broches de ramassage (11, 40, 56) se mettre en prise dans les produits de boulangerie (4) au niveau des côtés longitudinaux des réceptacles (3), dans lequel on prévoit plusieurs broches de ramassage (11, 40, 56) pour au moins l'un des côtés longitudinaux des réceptacles.

2. Dispositif selon la revendication 1, dans lequel les supports de broche (36a, 36b) pour les broches de ramassage se mettant en prise dans au moins l'un des côtés longitudinaux du produit de boulangerie (4) sont agencés sur le châssis (20), d'une manière ajustable à une distance mutuelle.

3. Dispositif selon l'une quelconque des revendications précédentes, dans lequel les supports de broche (6a, 36a) pour les broches de ramassage qui se mettent en prise dans le côté longitudinal du produit de boulangerie (4) et les supports de broche (6b, 36b) pour les broches de ramassage qui se mettent en prise dans l'autre côté longitudinal du produit de boulangerie (4) sont agencés sur le châssis (10, 20) espacé dans la direction transversale des réceptacles (3), dans lequel, de préférence, les supports de broche (6a, 6b, 36a, 36b) sont agencés sensiblement au-dessus des réceptacles (3).

4. Dispositif selon la revendication 3, dans lequel les broches de ramassage (40) ou les supports de broche (36a, 36b) sont agencé(e)s de manière rotative, dans lequel, de préférence, les axes de rotation (33a, 33b) pour les broches de ramassage (40) sont sensiblement parallèles à l'axe longitudinal du réceptacle (3).

5. Dispositif selon la revendication 4, dans lequel les broches de ramassage (40) sont prévues avec une extrémité de mise en prise (42, 43) qui est concentrique par rapport à l'axe de rotation (33a, 33b) en question.

6. Dispositif selon la revendication 3, dans lequel les supports de broche (7) sont agencés sensiblement de chaque côté des réceptacles (3), dans lequel, de préférence, les broches de ramassage (11) sont maintenues de manière linéairement mobile par les supports de broche (7), dans lequel, de préférence, les broches de ramassage (11) sont droites.

7. Dispositif selon la revendication 1 ou 2, dans lequel les supports de broche (66a) pour les broches de ramassage (56) sont mis en prise dans le premier côté longitudinal du produit de boulangerie (4) et les supports de broche (66b) pour les broches de ramassage (56) qui se mettent en prise dans l'autre côté longitudinal du produit de boulangerie (4), coïncident sensiblement dans la direction transversale des réceptacles (3), dans lequel, de préférence, les supports de broche (66a, 66b) sont agencés sensiblement au-dessus des réceptacles (3).

8. Dispositif selon la revendication 7, dans lequel les broches de ramassage (56) ou les supports de broche (66a, 66b) sont agencé(e)s de manière rotative et de préférence peuvent être entraîné(e)s par un entraînement commun (28), dans lequel, de préférence, l'axe de rotation (54) pour les broches de ramassage (56) est sensiblement parallèle à l'axe longitudinal du réceptacle (3).

9. Dispositif selon la revendication 8, dans lequel les broches de ramassage (56) sont prévues avec une extrémité (59) ou partie (58) de mise en prise qui est concentrique par rapport à l'axe de rotation (54) en question.

10. Dispositif selon la revendication 1 ou 2, dans lequel les broches de ramassage sont agencées de manière rotative dans les supports de broche et peuvent être entraînées de préférence par un entraînement commun, dans lequel, de préférence, l'axe de rotation pour les broches de ramassage est sensiblement parallèle à l'axe longitudinal des réceptacles.

11. Dispositif selon la revendication 10, dans lequel les broches de ramassage sont prévues avec une extrémité ou partie de mise en prise qui est concentrique par rapport à l'axe de rotation en question.

12. Dispositif selon l'une quelconque des revendications précédentes, prévu en outre avec des moyens pour déplacer les réceptacles vers le haut ou vers le bas par rapport aux supports de broche.

13. Dispositif selon l'une quelconque des revendications précédentes, dans lequel pour les deux côtés longitudinaux des réceptacles (3), on prévoit plusieurs broches de ramassage (11, 40, 56).

14. Dispositif selon l'une quelconque des revendications précédentes, dans lequel les supports de broche (36a, 36b) pour les broches de ramassage se mettant en prise dans les deux côtés longitudinaux du produit de boulangerie (4) sont agencés sur le châssis (20) d'une manière ajustable à une distance mutuelle.

15. Procédé pour retirer des produits de boulangerie allongés (4) de réceptacles allongés (3), après cuisson, dans lequel les réceptacles (3) sont placés avec leurs côtés longitudinaux adjacents, **caractérisé en ce que** les broches de ramassage (11, 40, 56) positionnées le long du côté longitudinal des réceptacles (3) sont insérées dans le produit de boulangerie (4) au niveau du côté longitudinal du produit de boulangerie (4), après quoi le réceptacle (3) et les broches de ramassage (11, 40, 56) s'éloignent dans la direction verticale (A) afin de retirer les produits de boulangerie (4) maintenus par les broches de ramassage (11, 40, 56) des réceptacles (3).

16. Procédé selon la revendication 15, dans lequel les broches de ramassage (11, 40, 56) sont insérées dans le produit de boulangerie (4) à partir des deux côtés longitudinaux.
